# EUROPEAN PATENT APPLICATION

(11) **EP 4 311 280 A1**
(43) Date of publication of application: **24.01.2024**
(21) Application number: 22778741.3
(22) Date of filing: 24.03.2022
(51) Int. Cl.: H04W 4/50

(54) **COMMUNICATION METHOD AND DEVICE**

(30) Priority: 02.04.2021 CN 202110363280
(71) Applicant: Huawei Technologies Co., Ltd., Shenzhen, Guangdong 518129 (CN)
(72) Inventor: QI, Caixia, Shenzhen, Guangdong 518129 (CN); ZHU, Fenqin, Shenzhen, Guangdong 518129 (CN); WANG, Yufang, Shenzhen, Guangdong 518129 (CN)
(74) Representative: Maiwald GmbH
(86) International application number: PCT/CN2022/082820
(87) International publication number: WO 2022/206558

(57) **Abstract**

A communication method and apparatus are provided, to implement combined deployment and selection of a plurality of network functions in a 5G architecture. This helps reduce deployment costs and complexity. In this application, a requesting network function sends a first network function type to a network repository function. The network repository function receives the first network function type from the requesting network function. The network repository function sends a profile of a first network function corresponding to the first network function type to the requesting network function. The requesting network function receives the profile of the first network function corresponding to the first network function type from the network repository function. The profile of the first network function includes a first indication, the first indication indicates combined deployment of the first network function and a second network function, and the first network function and the second network function have different network function types.

## Description

### CROSS-REFERENCE TO RELATED APPLICATIONS

This application claims priority to Chinese Patent Application No. 202110363280.2, filed with the China National Intellectual Property Administration on April 2, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a 4G and 5G convergence scenario, combined deployment of a 4G network element and a 5G network function (network function, NF) may be performed. For example, combined deployment of a convergence gateway (PDN Gateway, PGW) and a session management function (session management function, SMF) may be performed, or combined deployment of a network exposure function (network exposure function, NEF) and a service capability exposure function (service capability exposure function, SCEF) may be performed. An example of the combined deployment of the PGW and the SMF is used. When registering with a network repository function (network repository function, NRF), the SMF also registers a domain name (fully qualified domain name, FQDN) of the co-deployed PGW. When discovering the SMF from the NRF, another function may discover, by providing the FQDN, the SMF that is co-deployed with the PGW. The combined deployment of the 4G network element and the 5G network function avoids a problem of service interruption occurring when a terminal device is handed over between cells of different standards.

Existing combined deployment is applied only to a specific 4G and 5G convergence scenario, for example, the combined deployment of the PGW and the SMF, or the combined deployment of the NEF and the SCEF. However, in a current 5G architecture, to reduce deployment costs and complexity, combined deployment of a plurality of 5G network functions needs to be performed.

In this way, a method for implementing the combined deployment and selection of the plurality of 5G network functions in the 5G architecture needs to be provided.

### SUMMARY

This application provides a communication method and apparatus, to implement combined deployment and selection of a plurality of network functions in a 5G architecture. This helps reduce deployment costs and complexity.

According to a first aspect, this application provides a communication method, including: A network repository function receives a first network function type from a requesting network function. The network repository function sends a profile (profile) of a first network function corresponding to the first network function type to the requesting network function, where the profile of the first network function includes a first indication, the first indication indicates combined deployment (combined/co-located deployment) of the first network function and a second network function, and the first network function and the second network function have different network function types.

In the foregoing technical solution, the requesting network function requests, from the network repository function, the profile of the first network function having the first network function type. The profile of the first network function includes the first indication, where the first indication indicates the combined deployment of the first network function and the second network function, so that the requesting network function may determine combined deployment of the first network function and another network function. In this manner, the requesting network function requests, from the network repository function, a network function that is co-deployed with another network function. This helps implement combined deployment of a plurality of network functions, reduce deployment costs and complexity, and provide a more flexible network function deployment manner. In addition, a communication delay between the first network function and the second network function that are co-deployed is short. This helps optimize service experience of a terminal device.

In a possible implementation, the first indication includes an instance identifier of the second network function.

In the foregoing technical solution, the requesting network function may directly determine, based on the instance identifier of the second network function in the first indication, that the second network function that is co-deployed with the first network function exists. This helps the requesting network function request, when a network function that is co-deployed with the first network function needs to be discovered, a profile of the corresponding network function from the network repository function based on the instance identifier of the second network function, so that the requesting network function can select the first network function and the second network function that are co-deployed.

In a possible implementation, the method further includes: The network repository function receives an instance identifier of the second network function from the requesting network function. The network repository function sends a profile of the second network function corresponding to the instance identifier of the second network function to the requesting network function.

In the foregoing technical solution, when needing to discover the second network function from the network repository function, the requesting network function may request, based on the instance identifier of the second network function in the profile of the first network function, the profile of the second network function corresponding to the instance identifier of the second network function from the network repository function. Further, the requesting network function may determine, based on the profile of the second network function, a network function type of the second network function that is co-deployed with the first network function.

In a possible implementation, the first indication further includes a second network function type of the second network function. The method further includes: The network repository function receives the second network function type from the requesting network function.

In the foregoing technical solution, the requesting network function may determine, based on the second network function type in the profile of the first network function, that the second network function that is co-deployed with the first network function corresponds to the second network function type. When needing to select a network function that is co-deployed with the first network function and that corresponds to the second network function type, the requesting network function may discover the second network function from the network repository function.

In a possible implementation, the first indication includes a combination attribute.

In the foregoing technical solution, combination attributes in profiles of the plurality of co-deployed network functions are the same, and the network repository function may determine, based on a combination attribute in the profile of the first network function, a profile of the another network function that is co-deployed with the first network function. Correspondingly, the requesting network function may determine the combined deployment of the first network function and the second network function based on the combination attribute in the profile of the first network function and a combination attribute in the profile of the second network function. Based on the combination attribute, that the requesting network function requests the plurality of co-deployed network functions from the network repository function may be implemented, that is, that the requesting network function can select the first network function and the second network function that are co-deployed may be implemented. In addition, when another new network function is co-deployed with the first network function, a profile of the new network function may be set to include a same combination attribute, thereby having better forward compatibility and scalability.

In a possible implementation, the method further includes: The network repository function sends the profile of the second network function to the requesting network function, where the profile of the second network function includes the combination attribute.

In the foregoing technical solution, the network repository function may not only send the profile of the first network function to the requesting network function, but also send, based on the combination attribute in the profile of the first network function, the profile of the second network function that includes the same combination attribute to the requesting network function. The profile of the second network function that is co-deployed with the first network function does not need to be requested from the network repository function again. This helps reduce interaction signaling between the requesting network function and the network repository function, and simplify processing of the requesting network function.

In a possible implementation, the method further includes: The network repository function receives the combination attribute and a second network function type of the second network function from the requesting network function.

In the foregoing technical solution, the requesting network function may request the profile of the second network function from the network repository function based on the combination attribute and the second network function type. Correspondingly, the network repository function may send the profile of the second network function corresponding to the combination attribute and the second network function type to the requesting network function. When needing to select a network function that is co-deployed with the first network function and that corresponds to the second network function type, the requesting network function may discover the second network function from the network repository function. This helps reduce unnecessary signaling interaction between the requesting network function and the network repository function.

In a possible implementation, the method further includes: The network repository function receives a first registration request from the first network function, where the first registration request includes the profile of the first network function. The network repository function sends a first registration success response to the first network function.

In a possible implementation, the method further includes: The network repository function receives a second registration request from the second network function, where the second registration request includes the profile of the second network function, the profile of the second network function includes a second indication, and the second indication indicates the combined deployment of the second network function and the first network function. The network repository function sends a second registration success response to the second network function.

In the foregoing technical solution, when a network function registers with the network repository function, a profile of the network function is carried in a registration request, where the profile of the network function includes a combination indication indicating combined deployment of the network function and another network function. Therefore, when receiving a discovery request from the requesting network function, the network repository function may feed back, based on the combination indication in the profile of the network function, a profile of the another network function that is co-deployed with the network function to the requesting network function. Alternatively, the requesting network function may request, based on the combination indication in the profile of the network function, a profile of another network function from the network repository function again, to provide an implementation method in which the requesting network function requests, when a plurality of network functions are co-deployed in a 5G system, the plurality of co-deployed network functions from the network repository function.

The foregoing technical solution may provide a general method for discovering the co-deployed network function, and any type of network function that is co-deployed in a 5G network may be discovered by the requesting network function by using the foregoing technical solution.

In a possible implementation, the method further includes: The network repository function receives a combined network function preference indication from the requesting network function, where the combined network function preference indication indicates to: when the profile of the network function includes the combination indication, send the profile of the network function that includes the combination indication to the requesting network function; or when the profile of the network function does not include the combination indication, send the profile of the network function that does not include the combination indication to the requesting network function.

In the foregoing technical solution, the requesting network function sends the combined network function preference indication to the network repository function, to avoid that when the profile of the network function does not include the combination indication, the network repository function does not feed back the profile of the network function to the requesting network function, and consequently, the requesting network function fails to request the network function from the network repository function, so that communication of the terminal device is interrupted. This helps improve a success rate in which the requesting network function obtains the profile of the network function through requesting, and ensure the service experience of the terminal device.

According to a second aspect, this application provides a communication method, including: A requesting network function sends a first network function type to a network repository function. The requesting network function receives a profile of a first network function corresponding to the first network function type from the network repository function, where the profile of the first network function includes a first indication, the first indication indicates combined deployment of the first network function and a second network function, and the first network function and the second network function have different network function types.

In a possible implementation, the first indication includes an instance identifier of the second network function.

In a possible implementation, the method further includes: The requesting network function sends an instance identifier of the second network function to the network repository function. The requesting network function receives a profile of the second network function corresponding to the instance identifier of the second network function from the network repository function.

In a possible implementation, the first indication further includes a second network function type of the second network function. The method further includes: The requesting network function determines the combined deployment of the first network function and the second network function based on the second network function type, and sends the second network function type to the network repository function.

In a possible implementation, the first indication includes a combination attribute.

In a possible implementation, the method further includes: The requesting network function receives a profile of the second network function from the network repository function, where the profile of the second network function includes the combination attribute.

In a possible implementation, the method further includes: The requesting network function sends the combination attribute and a second network function type of the second network function to the network repository function.

In a possible implementation, the method further includes: The requesting network function determines the combined deployment of the first network function and the second network function based on the combination attribute in the profile of the second network function and a combination attribute in the profile of the first network function.

In a possible implementation, the method further includes: The requesting network function sends a combined network function preference indication to the network repository function, where the combined network function preference indication indicates to: when a profile of a network function includes a combination indication, receive the profile of the network function that includes the combination indication from the network repository function; or when a profile of a network function does not include a combination indication, receive the profile of the network function that does not include the combination indication from the network repository function.

According to a third aspect, this application provides a communication method, including: A first network function sends a first registration request to a network repository function, where the first registration request includes a profile of the first network function, the profile of the first network function includes a first indication, the first indication indicates combined deployment of the first network function and a second network function, and the first network function and the second network function have different network function types. The first network function receives a first registration success response from the network repository function.

According to a fourth aspect, this application provides a communication method, including: A requesting network function sends a first network function type to a network repository function. The network repository function receives the first network function type from the requesting network function. The network repository function sends a profile of a first network function corresponding to the first network function type to the requesting network function. The requesting network function receives the profile of the first network function corresponding to the first network function type from the network repository function, where the profile of the first network function includes a first indication, the first indication indicates combined deployment of the first network function and a second network function, and the first network function and the second network function have different network function types.

For technical effects that can be achieved in any one of the second aspect to the fourth aspect, refer to descriptions of beneficial effects in the first aspect. Details are not described herein again.

According to a fifth aspect, this application provides a communication method, including: A network repository function receives a first network function type and a second network function type that are from a requesting network function. The network repository function sends a combined network function profile to the requesting network function, where the combined network function profile is a profile of combined deployment of a first network function corresponding to the first network function type and a second network function corresponding to the second network function type, and the first network function type is different from the second network function type.

In the foregoing technical solution, the requesting network function requests, from the network repository function, the profile of the combined network function having the first network function type and the second network function type. The profile is the profile of the combined deployment of the first network function corresponding to the first network function type and the second network function corresponding to the second network function type. In this way, combined deployment of a plurality of network functions is implemented, and the requesting network function may obtain the profile of the combined network function through requesting. This helps reduce deployment costs and complexity, and provide a more flexible network function deployment manner. In addition, a communication delay between the first network function and the second network function that are co-deployed is short. This helps optimize service experience of a terminal device.

In a possible implementation, the method further includes: The network repository function receives a third registration request from the combined network function, where the third registration request includes the combined network function profile, and the combined network function profile includes the first network function type and the second network function type. The network repository function sends a third registration success response to the combined network function.

In the foregoing technical solution, when the combined network function registers with the network repository function, the profile of the combined network function is carried in a registration request, and the profile of the combined network function includes network function types of a plurality of network functions deployed in the combined network function. When discovering the combined network function from the network repository function, the requesting network function may discover, based on a plurality of network function types in the profile of the combined network function, the combined network function having the plurality of network function types, to provide an implementation method in which the requesting network function requests the combined network function from the network repository function when the plurality of network functions are co-deployed in a 5G system. The foregoing technical solution may provide a general method for discovering the co-deployed network function, and any type of network function that is co-deployed in a 5G network may be discovered by the requesting network function by using the foregoing technical solution.

In a possible implementation, the combined network function profile further includes an instance identifier corresponding to both the first network function and the second network function.

According to a sixth aspect, this application provides a communication method, including: A requesting network function sends a first network function type and a second network function type to a network repository function. The requesting network function receives a combined network function profile from the network repository function, where the combined network function profile is a profile of combined deployment of a first network function corresponding to the first network function type and a second network function corresponding to the second network function type, and the first network function type is different from the second network function type.

In a possible implementation, the combined network function profile further includes an instance identifier corresponding to both the first network function and the second network function.

According to a seventh aspect, this application provides a communication method, including: A combined network function sends a third registration request to a network repository function, where the third registration request includes a combined network function profile, the combined network function profile is a profile of combined deployment of a first network function corresponding to a first network function type and a second network function corresponding to a second network function type, and the first network function type is different from the second network function type. The combined network function receives a third registration success response from the network repository function.

According to an eighth aspect, this application provides a communication method, including: A requesting network function sends a first network function type and a second network function type to a network repository function. The network repository function receives the first network function type and the second network function type that are from the requesting network function. The network repository function sends a combined network function profile to the requesting network function. The requesting network function receives the combined network function profile from the network repository function, where the combined network function profile is a profile of combined deployment of a first network function corresponding to the first network function type and a second network function corresponding to the second network function type, and the first network function type is different from the second network function type.

For technical effects that can be achieved in any one of the sixth aspect to the eighth aspect, refer to descriptions of beneficial effects in the fifth aspect. Details are not described herein again.

According to a ninth aspect, an embodiment of this application provides a communication apparatus. The apparatus has a function of the network repository function in any one of the first aspect or the possible implementations of the first aspect, a function of the requesting network function in any one of the second aspect or the possible implementations of the second aspect, a function of the first network function in any one of the third aspect or the possible implementations of the third aspect, a function of the requesting network function in any one of the fifth aspect or the possible implementations of the fifth aspect, a function of the combined network function in any one of the sixth aspect or the possible implementations of the sixth aspect, or a function of the network repository function in any one of the seventh aspect or the possible implementations of the seventh aspect.

The function of the communication apparatus may be implemented by hardware, or may be implemented by hardware executing corresponding software. The hardware or the software includes one or more modules, units, or means (means) corresponding to the function.

In a possible implementation, a structure of the apparatus includes a processing unit and a transceiver unit. The processing unit is configured to support the apparatus in performing the function of the network repository function in any one of the first aspect or the possible implementations of the first aspect, the function of the requesting network function in any one of the second aspect or the possible implementations of the second aspect, the function of the first network function in any one of the third aspect or the possible implementations of the third aspect, the function of the requesting network function in any one of the fifth aspect or the possible implementations of the fifth aspect, the function of the combined network function in any one of the sixth aspect or the possible implementations of the sixth aspect, or the function of the network repository function in any one of the seventh aspect or the possible implementations of the seventh aspect. The transceiver unit is configured to support communication between the apparatus and another communication device. For example, when the apparatus is the network repository function in any one of the first aspect or the possible implementations of the first aspect, the apparatus may receive a first network function type from a requesting network function, and send a profile of a first network function corresponding to the first network function type to the requesting network function. The communication apparatus may further include a storage module. The storage module is coupled to the processing unit, and stores program instructions and data that are necessary for the apparatus. In an example, the processing unit may be a processor, a communication module may be a transceiver, and the storage module may be a memory. The memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, so that the apparatus performs the method according to any one of the first aspect or the possible implementations of the first aspect, performs the method according to any one of the second aspect or the possible implementations of the second aspect, performs the method according to any one of the third aspect or the possible implementations of the third aspect, performs the method according to any one of the fifth aspect or the possible implementations of the fifth aspect, performs the method according to any one of the sixth aspect or the possible implementations of the sixth aspect, or performs the method according to any one of the seventh aspect or the possible implementations of the seventh aspect. Optionally, the apparatus further includes a communication interface, and the processor is coupled to the communication interface. When the apparatus is a device, the communication interface may be a transceiver or an input/output interface. When the apparatus is a chip included in the device, the communication interface may be an input/output interface of the chip. Optionally, the transceiver may be a transceiver circuit, and the input/output interface may be an input/output circuit.

According to a tenth aspect, an embodiment of this application provides a chip system, including a processor, where the processor is coupled to a memory, and the memory is configured to store a program or instructions. When the program or the instructions are executed by the processor, the chip system is enabled to implement the method according to any one of the first aspect or the possible implementations of the first aspect, implement the method according to any one of the second aspect or the possible implementations of the second aspect, implement the method according to any one of the third aspect or the possible implementations of the third aspect, implement the method according to any one of the fifth aspect or the possible implementations of the fifth aspect, implement the method according to any one of the sixth aspect or the possible implementations of the sixth aspect, or implement the method according to any one of the seventh aspect or the possible implementations of the seventh aspect.

Optionally, the chip system further includes an interface circuit, and the interface circuit is configured to exchange code instructions to the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated into a same chip, or may be separately disposed on different chips.

According to an eleventh aspect, an embodiment of this application provides a computer-readable storage medium. The computer-readable storage medium stores a computer program or instructions. When the computer program or the instructions are executed, a computer is enabled to perform the method according to any one of the first aspect or the possible implementations of the first aspect, perform the method according to any one of the second aspect or the possible implementations of the second aspect, perform the method according to any one of the third aspect or the possible implementations of the third aspect, perform the method according to any one of the fifth aspect or the possible implementations of the fifth aspect, perform the method according to any one of the sixth aspect or the possible implementations of the sixth aspect, or perform the method according to any one of the seventh aspect or the possible implementations of the seventh aspect.

According to a twelfth aspect, an embodiment of this application provides a computer program product. When a computer reads and executes the computer program product, the computer is enabled to perform the method according to any one of the first aspect or the possible implementations of the first aspect, perform the method according to any one of the second aspect or the possible implementations of the second aspect, perform the method according to any one of the third aspect or the possible implementations of the third aspect, perform the method according to any one of the fifth aspect or the possible implementations of the fifth aspect, perform the method according to any one of the sixth aspect or the possible implementations of the sixth aspect, or perform the method according to any one of the seventh aspect or the possible implementations of the seventh aspect.

According to a thirteenth aspect, an embodiment of this application provides a communication system. The communication system includes a network repository function configured to perform the method according to any one of the first aspect or the possible implementations of the first aspect, a requesting network function configured to perform the method according to any one of the second aspect or the possible implementations of the second aspect, and a first network function configured to perform the method according to any one of the third aspect or the possible implementations of the third aspect. Alternatively, the communication system includes a requesting network function configured to perform the method according to any one of the fifth aspect or the possible implementations of the fifth aspect, a combined network function configured to perform the method according to any one of the sixth aspect or the possible implementations of the sixth aspect, and a network repository function configured to perform the method according to any one of the seventh aspect or the possible implementations of the seventh aspect.

For technical effects that can be achieved in any one of the ninth aspect to the thirteenth aspect, refer to descriptions of beneficial effects in the first aspect or the fifth aspect. Details are not described herein again.

### BRIEF DESCRIPTION OF DRAWINGS

FIG. 1 is a schematic diagram of an architecture of a communication system according to this application;
FIG. 2 is a schematic flowchart of an example of network function registration according to this application;
FIG. 3 is a schematic flowchart of an example of network function discovery according to this application;
FIG. 4 is a schematic flowchart of an example of other network function discovery according to this application;
FIG. 5 is a schematic flowchart of an example of network function registration and discovery according to this application;
FIG. 6 is a schematic diagram of a structure of an example of a communication apparatus according to this application; and
FIG. 7 is a schematic diagram of a structure of an example of another communication apparatus according to this application.

### DESCRIPTION OF EMBODIMENTS

The following describes in detail embodiments of this application with reference to accompanying drawings.

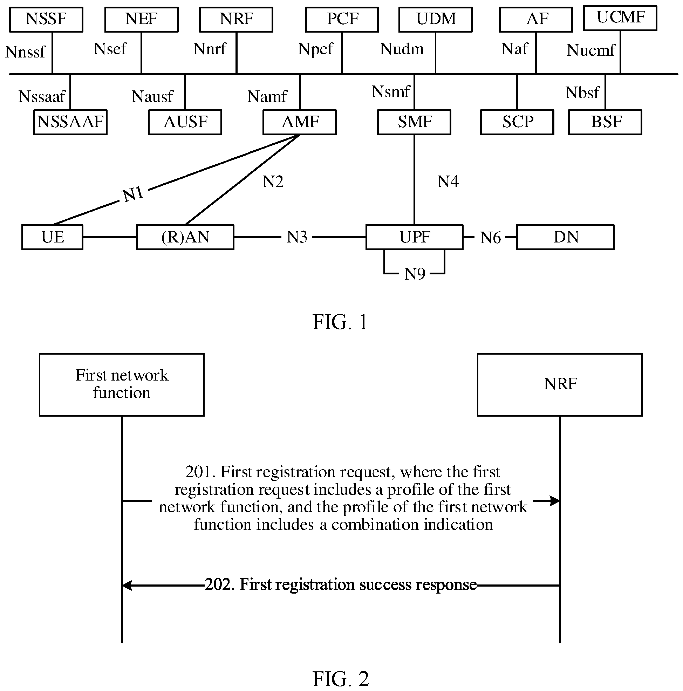

FIG. 1 is a schematic diagram of an example of a mobile communication network architecture. The network architecture includes a terminal device, an access network device, an access and mobility management function, a session management function, a user plane function, a policy control function, a network slice selection function, a network slice-specific authentication and authorization function, a network repository function, a network data analytics function, a unified data management function, a unified data repository function, an authentication server function, a network capability exposure function, a UE radio capability management function, a binding support function, an application function, and a data network (data network, DN) connected to a carrier network.

For example, the terminal device accesses a wireless network by using an access node at a current location. The terminal device may send service data to the data network and receive service data from the data network by using the access network device and the user plane function.

The access and mobility management function is mainly for attachment, mobility management, a tracking area update procedure, and the like of the terminal device in a mobile network. In a 5G communication system, the access and mobility management function may be an access and mobility management function (access and mobility management function, AMF). In a future communication system (for example, a 6G communication system), the access and mobility management function may still be an AMF, or may have another name. This is not limited in this application.

The session management function is mainly for session management in the mobile network, for example, session establishment, modification, and release. Specific functions include, for example, assigning an internet protocol address to the terminal device, and selecting the user plane function that provides a packet forwarding function. In the 5G communication system, the session management function may be a session management function (session management function, SMF). In the future communication system (for example, the 6G communication system), the session management function may still be an SMF, or may have another name. This is not limited in this application.

The user plane function is mainly for processing a user packet, for example, forwarding and charging. In the 5G communication system, the user plane function may be a user plane function (user plane function, UPF). In the future communication system (for example, the 6G communication system), the user plane function may still be a UPF, or may have another name. This is not limited in this application.

The policy control function includes a policy control function, a charging policy control function, quality of service (quality of service, QoS) control, and the like. In the 5G communication system, the policy control function may be a policy control function (policy control function, PCF). In the future communication system (for example, the 6G communication system), the policy control function may still be a PCF, or may have another name. This is not limited in this application.

The network slice selection function is mainly for selecting a proper network slice for a service of the terminal device. In the 5G communication system, the network slice selection function may be a network slice selection function (network slice selection function, NSSF). In the future communication system (for example, the 6G communication system), the network slice selection function may still be an NSSF, or may have another name. This is not limited in this application.

The network slice-specific authentication and authorization function (network slice-specific authentication and authorization function, NSSAAF) is mainly for authentication and authorization for the terminal device to access a specific network slice.

The network repository function is mainly for providing registration and discovery of a network function or a service provided by the network function. In the 5G communication system, the network repository function may be a network repository function (network repository function, NRF). In the future communication system (for example, the 6G communication system), the network repository function may still be an NRF, or may have another name. This is not limited in this application.

The network data analytics function may collect data from various network functions, such as the policy control function, the session management function, the user plane function, the access management function, and the application function (through the network capability exposure function), and perform analysis and prediction. In the 5G communication system, the network data analytics function may be a network data analytics function (network data analytics function, NWDAF). In the future communication system (for example, the 6G communication system), the network data analytics function may still be an NWDAF, or may have another name. This is not limited in this application.

The unified data management function is mainly for managing subscription information of the terminal device. In the 5G communication system, the unified data management function may be a unified data management (unified data management, UDM) function. In the future communication system (for example, the 6G communication system), the unified data management function may still be a UDM function, or may have another name. This is not limited in this application.

The unified data repository function is mainly for storing structured data information, including subscription information, policy information, and network data or service data defined in a standard format. In the 5G communication system, the unified data repository function may be a unified data repository (unified data repository, UDR) function. In the future communication system (for example, the 6G communication system), the unified data repository function may still be a UDR function, or may have another name. This is not limited in this application.

The authentication server function is mainly for performing security authentication on the terminal device. In the 5G communication system, the authentication server function may be an authentication server function (authentication server function, AUSF). In the future communication system (for example, the 6G communication system), the authentication server function may still be an AUSF, or may have another name. This is not limited in this application.

The network capability exposure function can expose some functions of the network to an application in a controlled manner. In the 5G communication system, the network capability exposure function may be an NEF. In the future communication system (for example, the 6G communication system), the network capability exposure function may still be an NEF, or may have another name. This is not limited in this application.

The UE radio capability management function is for storing and managing a radio capability of the terminal device in the network. In the 5G communication system, the UE radio capability management function may be a UE radio capability management function (UE radio capability management function, UCMF). In the future communication system (for example, the 6G communication system), the UE radio capability management function may still be a UCMF, or may have another name. This is not limited in this application.

The binding support function is for maintaining a correspondence between a service function and an internet protocol (Internet Protocol, IP) address between user networks. In the 5G communication system, the binding support function may be a binding support function (binding support function, BSF). In the future communication system (for example, the 6G communication system), the binding support function may still be a BSF, or may have another name. This is not limited in this application.

The application function may provide service data of various applications for a control plane function of a communication network of a carrier, or obtain data information and control information of the network from the control plane function of the communication network. In the 5G communication system, the application function may be an application function (application function, AF). In the future communication system (for example, the 6G communication system), the application function may still be an AF, or may have another name. This is not limited in this application.

The data network is mainly for providing a data transmission service for the terminal device. The data network may be a private network, for example, a local area network, may be a public data network (public data network, PDN), for example, the internet (Internet), or may be a dedicated network co-deployed by the carrier, for example, a configured IP multimedia network subsystem (IP multimedia core network subsystem, IMS) service.

It should be noted that in embodiments of this application, the function may also be referred to as a network element, a network function, a function entity, a device, or the like. For example, the access and mobility management function may also be referred to as an access and mobility management network element, an access and mobility management network function, an access and mobility management function entity, or the like. Names of the functions are not limited in this application. A person skilled in the art may change the name of the function to another name to perform the same function. This falls within the protection scope of this application.

For ease of description, the access and mobility management network element, the session management function, the network slice selection function, the network slice-specific authentication and authorization function, the network repository function, and the binding support function may be respectively referred to as an AMF, an SMF, an NSSF, an NSSAAF, an NRF, and a BSF for short below.

With reference to the example of the mobile communication network architecture shown in FIG. 1, this application provides a combined deployment scenario. In the combined deployment scenario, a plurality of network functions may be co-deployed (the co-deployment may also be referred to as combined deployment, which may be represented as combined/co-located deployment in English). For example, a network function 1 and a network function 2 are co-deployed. When the co-deployed network function 1 serves as a client and needs to invoke a service provided by the network function 2 that serves as a server, the network function 1 may preferentially select the co-deployed network function 2. This helps reduce communication complexity and a communication delay. For a requesting network function, for example, when a network function 3 selects the network function 1 and the network function 2, the network function 1 and the network function 2 that are co-deployed may alternatively be selected.

For example, combined deployment of the network function 1 and the network function 2 may be understood as follows.
a. The network function 1 and the network function 2 are deployed in a combined network function (or referred to as an entity, a device, or the like). For example, the combined network function may implement functions of both the network function 1 and the network function 2. For example, the network function 1 and the network function 2 share one processor. For another example, the network function 1 and the network function 2 respectively implement respective functions by using different processors in one network element.
b. The network function 1 and the network function 2 are co-deployed at a physical location, but the network function 1 and the network function 2 belong to different network elements. For example, the network function 1 and the network function 2 may be two different network elements, but the two network elements are deployed in a same equipment room.

With reference to a specific application, the following two scenarios are provided as examples.

For example, in a scenario 1, the network function 1 is an SMF, the network function 2 is a BSF, and the network function 3 is an AMF. An SMF 1 and a BSF 1 are co-deployed, and a BSF 2 is deployed independently (that is, the BSF 2 is not co-deployed with the SMF 1). When the SMF 1 needs to invoke a service of the BSF, the BSF 1 may be preferentially selected and the BSF 2 may not be selected. Because the SMF 1 and the BSF 1 are co-deployed, the SMF 1 invokes the BSF 1. Compared with invoking the BSF 2 by the SMF 1, the communication complexity and the communication delay can be effectively reduced. When the AMF needs to select the SMF, the co-deployed SMF 1 may be selected. Then, when the AMF needs to select the BSF, the BSF 1 that is co-deployed with the SMF 1 may also be selected.

For another example, in a scenario 2, the network function 1 is an NSSF, the network function 2 is an NSSAAF, and the network function 3 is an AMF. An NSSF 1 and an NSSAAF 1 are co-deployed, and an NSSAAF 2 is deployed independently (that is, the NSSAAF 2 is not co-deployed with the NSSF 1). When the NSSF 1 needs to invoke a service of the NSSAAF, the NSSAAF 1 may be preferentially selected and the NSSAAF 2 may not be selected. Because the NSSF 1 and the NSSAAF 1 are co-deployed, the NSSF 1 invokes the NSSAAF 1. Compared with invoking the NSSAAF 2 by the NSSF 1, the communication complexity and the communication delay can be effectively reduced. When the AMF needs to select the NSSF, the co-deployed NSSF 1 may be selected. Then, when the AMF needs to select the NSSAAF, the NSSAAF 1 that is co-deployed with the NSSF 1 may also be selected.

This application provides a communication method. The communication method is applicable to the foregoing combined deployment scenario. The combined deployment scenario includes a plurality of co-deployed network functions, and any two of the plurality of co-deployed network functions have different network function types. Further, the plurality of co-deployed network functions may include a first network function and one or more other network functions. In this application, another network function that is co-deployed with the first network function may be referred to as another network function for short. For example, the one or more other network functions may include a second network function, include a second network function and a third network function, or include a second network function, a third network function, ..., and an N^{th} network function, where N is greater than or equal to 4.

This application may specifically include a registration procedure and a discovery procedure. The following first describes an implementation in which a co-deployed network function registers a profile (profile) of the network function with an NRF with reference to an example of a registration flowchart shown in FIG. 2. For ease of description, a co-deployed first network function is used as an example for description.

Step 201: The first network function sends a first registration request to the NRF.

The first registration request includes a profile of the first network function. The profile of the first network function includes a combination indication (which may be referred to as a first indication), where the first indication may indicate that one or more other network functions that are co-deployed with the first network function exist. For example, when the first network function and a second network function are co-deployed, the first indication may indicate that the second network function that is co-deployed with the first network function exists. For another example, when the first network function, the second network function, and a third network function are co-deployed, the first indication may indicate that the second network function and the third network function that are co-deployed with the first network function exist.

Based on different content of the first indication, there may be the following two implementations.

Implementation 1: The first indication may include an instance identifier (network function Instance identity, NF Instance ID) of one or more other network functions that are co-deployed with the first network function. The one or more instance identifiers indicate that one or more other network functions that are co-deployed with the first network function exist.

In the implementation 1, the first indication may further include a network function type corresponding to the instance identifier of the one or more other network functions that are co-deployed with the first network function.

It is explained that when the first network function registers with the NRF, the first indication carries only the instance identifier of another network function that is co-deployed with the first network function, and the instance identifier of the another network function does not indicate the network function type corresponding to the instance identifier. After requesting the profile of the first network function, a requesting network function can only determine that the another network function that is co-deployed with the first network function exists, but cannot determine the network function type of the another network function. In this way, the network function type corresponding to the instance identifier of the another network function may be further carried in the first indication.

For example, when the second network function and the first network function are co-deployed, the first indication may include an instance identifier of the second network function and a network function type (which may be referred to as a second network function type) corresponding to the instance identifier of the second network function, to indicate that a network function that is co-deployed with the first network function and that corresponds to the second network function type and the instance identifier of the second network function exists. Further, when the third network function and the first network function are co-deployed, the first indication may further include an instance identifier of the third network function and a network function type (which may be referred to as a third network function type) corresponding to the instance identifier of the third network function, to indicate that a network function that is co-deployed with the first network function and that corresponds to the third network function type and the instance identifier of the third network function exists.

Implementation 2: The first indication may include a combination attribute, and the combination attribute may indicate that one or more other network functions that are co-deployed with the first network function exist.

In this application, combination attributes in profiles of a plurality of co-deployed network functions are the same. For example, when the first network function and the second network function are co-deployed, a combination attribute in the profile of the first network function is the same as a combination attribute in a profile of the second network function. When the first network function, the second network function, and the third network function are co-deployed, the combination attribute in the profile of the first network function, the combination attribute in the profile of the second network function, and a combination attribute in a profile of the third network function are the same.

In other words, one combination attribute may identify the plurality of co-deployed network function. If combination attributes in profiles of two or more network functions are the same, it indicates combined deployment of the two or more network functions.

For example, the combination attribute may be a globally unique character string, and the character string may be used to represent the plurality of co-deployed network functions. For example, an SMF 1 and a BSF 1 are co-deployed, and a corresponding combination attribute may be smfbsf123456. An SMF 2 and a BSF 2 are co-deployed, and a corresponding combination attribute may be smfbsf345678.

For example, the combination attribute may be a plurality of character strings distinguished in a dotted format, and the character strings may include but are not limited to a network function name, deployment location information, data center (data center) information, and the like. For example, an SMF 1 and a BSF 1 are co-deployed, and a corresponding combination attribute may be smfbsf32.pudong.shanghai. Alternatively, an SMF 2 and a BSF 2 are co-deployed, and a corresponding combination attribute may be dc56.beijing.

It should be added that, in the foregoing implementation 1 and implementation 2, the profile of the first network function may not only include the first indication, but also include network element information and service information of the first network function. The network element information of the first network function includes an instance identifier of the first network function, a network function type (which may be referred to as a first network function type), a slice identifier, a network data name, an IP address, a priority, a capacity, load, service location information, and the like. The service information of the first network function includes a service name, version information, a service instance identifier, a service priority, a service capacity, service load, and the like. The profile of the first network function is for providing information used when a client selects and accesses the first network function, for example, an IP address when accessing the first network function.

Step 202: The NRF sends a first registration success response to the first network function.

For example, after storing the profile of the first network function, the NRF may send the first registration success response to the first network function, where the first registration success response indicates that the profile of the first network function has been successfully registered.

It should be noted that, in the one or more other network functions that are co-deployed with the first network function, for an implementation in which any one of the other network functions registers a profile of the network function with the NRF, for example, the second network function registers the profile of the second network function with the NRF, or the third network function registers the profile of the third network function with the NRF, refer to the implementation in which the first network function registers the profile of the first network function with the NRF in the foregoing embodiment. Details are not described again.

In the foregoing registration procedure, the network function may include the combination indication in the profile of the network function, and register the profile of the network function with the NRF, where the combination indication indicates a network function that is co-deployed with the network function. Further, in the discovery procedure, the requesting network function may discover the first network function and/or the second network function from the NRF based on the combination indication in the profile of the network function.

Further, based on different fields included in the first indication in the registration procedure, the following describes two cases.

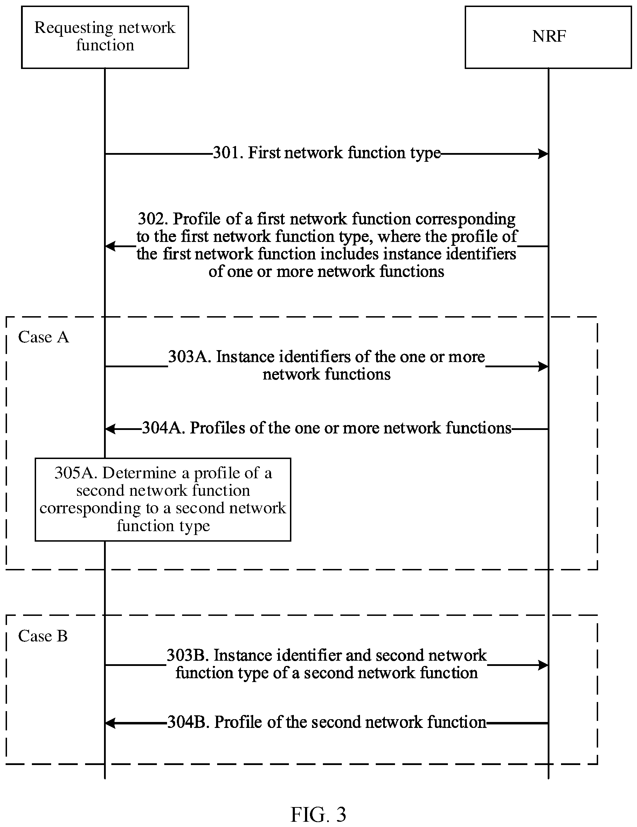

FIG. 3 is a schematic flowchart of an example of discovering a first network function and a second network function by a requesting network function from an NRF when a first indication includes an instance identifier of one or more other network functions that are co-deployed with the first network function according to this application.

In a procedure of FIG. 3:
Step 301: The requesting network function sends a first network function type to the NRF.

The first network function type is used by the requesting network function to request a profile of the first network function corresponding to the first network function type from the NRF. In an optional implementation, the requesting network function may further send a first parameter to the NRF. The first parameter is a parameter other than the first network function type and for requesting the profile of the first network function. For example, the first parameter is location information of a terminal device, a slice identifier corresponding to a protocol data unit (protocol data unit, PDU) session, a network data name, or the like.

In an optional implementation, the requesting network function sends a first discovery request to the NRF, where the first discovery request includes the first network function type and the first parameter, and the first discovery request is used by the requesting network function to request the profile of the first network function from the NRF. In addition, the requesting network function may alternatively include the first network function type and the first parameter in a plurality of different requests respectively, and the plurality of different requests are used by the requesting network function to request the profile of the first network function from the NRF.

Step 302: The NRF sends the profile of the first network function corresponding to the first network function type to the requesting network function. The profile of the first network function includes a first indication, and the first indication includes the instance identifier of the one or more other network functions that are co-deployed with the first network function.

In this application, profiles of a plurality of network functions are registered in the NRF. The profile of each network function may include an instance identifier, a network function type, network element information, service information, and the like of the network function. Further, when a network function is co-deployed with another network function, a profile of the network function may further include a combination indication corresponding to the network function. In this scenario, the combination indication corresponding to the network function may specifically include an instance identifier of another network function that is co-deployed with the network function, or an instance identifier of another network function that is co-deployed with the network function and a network function type corresponding to the instance identifier.

In an optional implementation, after receiving the first network function type sent by the requesting network function, the NRF may determine a profile of a network function corresponding to the first network function type, that is, the profile of the first network function, from the profiles of the plurality of network functions based on the first network function type. It should be noted that there may be the profiles of the plurality of network functions on the NRF, and network function types of the network functions are the first network function type.

In an optional implementation, the NRF may alternatively receive the first parameter sent by the requesting network function, and determine a profile of a network function that corresponds to both the first network function type and the first parameter, that is, the profile of the first network function, from the profiles of the plurality of network functions based on the first network function type and the first parameter. Similarly, there may be the profiles of the plurality of network functions on the NRF, network function types of the network functions are the first network function type, and the first parameter is supported.

In an optional implementation, the NRF may receive the first discovery request from the requesting network function, where the first discovery request includes the first network function type and the first parameter, so that the NRF determines the profile of the first network function corresponding to the first network function type and the first parameter. Alternatively, the NRF may receive a plurality of requests from the requesting network function, and obtain the first network function type and the first parameter from the plurality of requests, so that the NRF determines the profiles of the first network functions corresponding to the plurality of requests.

In this application, the NRF may determine the profiles of one or more first network functions, and send the profiles of the one or more first network functions to the requesting network function. Further, the NRF may include the profiles of the one or more first network functions in corresponding messages respectively and send the messages to the requesting network function, or combine the profiles into one message and send the message to the requesting network function. In an optional implementation, the NRF may include the profiles of the one or more first network functions in a first discovery response corresponding to the first discovery request, and send the first discovery response to the requesting network function.

Correspondingly, after receiving the profiles of the one or more first network functions from the NRF, the requesting network function may select a profile of one first network function from the profiles, and communicate with the first network function based on the profile of the first network function. In an optional implementation, the requesting network function determines, based on pre-configuration information, whether to select, from the profiles of the one or more first network functions, a profile of a network function that is co-deployed with another network function. For example, if the requesting network function is preconfigured to select a co-deployed first network function, the requesting network function may select, from the profiles of the one or more first network functions, a profile of the first network function that includes the combination indication (that is, the first indication).

After selecting the first network function, the requesting network function may further need to select a second network function. In an optional implementation, the requesting network function obtains a profile of the second network function corresponding to a second network function type from the NRF based on the first indication in the profile of the first network function.

Based on different information included in the first indication in the profile of the first network function, there may be the following two cases.

Case A: The profile of the first network function includes the instance identifiers of the one or more other network functions that are co-deployed with the first network function, but does not include network function types corresponding to the instance identifiers of the one or more other network functions.

In the case A, the requesting network function may request a profile of the network function corresponding to the instance identifier of the network function from the NRF based on the instance identifiers that are of the one or more other network functions that are co-deployed with the first network function and that are in the profile of the first network function. For details, refer to step 303A to step 305A in FIG. 3.

Step 303A: The requesting network function sends the instance identifiers of one or more network functions to the NRF.

It should be noted herein that the requesting network function receives the profile of the first network function from the NRF, where the profile of the first network function includes the instance identifiers of the one or more other network functions that are co-deployed with the first network function. However, the requesting network function does not determine the network function types respectively corresponding to the instance identifiers of the one or more other network functions (for details, refer to the descriptions in step 201). Therefore, the requesting network function sends the instance identifiers (that is, the instance identifiers of the one or more other network functions in the first indication) of the one or more network functions to the NRF, to request the profiles corresponding to the instance identifiers of the one or more network functions.

In an example, the requesting network function may send a first data request to the NRF, where the first data request includes the instance identifiers of the one or more network functions, and the first data request is used by the requesting network function to request, from the NRF, the profiles of the network functions respectively corresponding to the instance identifiers of the one or more network functions. In another example, the requesting network function may send a plurality of first data requests to the NRF. For any first data request, the first data request may include an instance identifier of a network function corresponding to the first data request. The first data request is used by the requesting network function to request a profile of the network function corresponding to the instance identifier of the network function in the first data request from the NRF.

Step 304A: The NRF sends the profiles of the network functions respectively corresponding to the instance identifiers of the one or more network functions to the requesting network function.

The NRF may determine the profiles of the network functions respectively corresponding to the instance identifiers of the one or more network functions based on the instance identifiers (that is, the instance identifiers of the one or more other network functions in the first indication) of the one or more network functions, and then send the profiles of the one or more network functions to the requesting network function. For example, the profile of the network function may also include the combination indication.

For example, when the first network function and the second network function are co-deployed, the profile of the second network function may also include a combination indication (which may be referred to as a second indication), and the second indication may specifically include an instance identifier of the first network function, or include an instance identifier and the first network function type of the first network function.

For example, when the first network function, the second network function, and a third network function are co-deployed, the second indication in the profile of the second network function may specifically include the instance identifier of the first network function and an instance identifier of the third network function, or include the instance identifier and the first network function type of the first network function, an instance identifier of the third network function, and a network function type (which may be referred to as a third network function type) corresponding to the instance identifier of the third network function. The profile of the third network function may also include a combination indication (which may be referred to as a third indication), and the third indication may specifically include the instance identifier of the first network function and the instance identifier of the second network function, or include the instance identifier and the first network function type of the first network function, the instance identifier of the second network function, and a network function type (which may be referred to as the second network function type) corresponding to the instance identifier of the second network function.

In addition, the profile of the second network function may further include network element information, service information, and the like of the second network function. The profile of the third network function may further include network element information, service information, and the like of the third network function.

In an example, the NRF receives the first data request from the requesting network function, where the first data request includes the instance identifiers of the one or more network functions. The NRF sends a first data response corresponding to the first data request to the requesting network function, where the first data response includes the profiles of the network functions respectively corresponding to the instance identifiers of the one or more network functions. In another example, the NRF receives the plurality of first data requests from the requesting network function, where any first data request may include the instance identifier of the network function corresponding to the first data request. The NRF sends a first data response corresponding to the first data request to the requesting network function, where the first data response includes the profile of the network function corresponding to the instance identifier of the network function in the first data request.

Step 305A: The requesting network function determines the profile of the second network function corresponding to the second network function type from the profiles of the network functions corresponding to the instance identifiers of the one or more network functions.

After receiving the profiles of the one or more network functions from the NRF, the requesting network function may determine the network function types of the one or more network functions that are co-deployed with the first network function, and then the requesting network function may select, from the profiles of the one or more network functions based on the second network function type, a profile (that is, the profile of the second network function) of a network function whose network function type is the second network function type.

Based on the foregoing examples from step 303A to step 305A, the first network function, the second network function, and the third network function are co-deployed, and the first network function, the second network function, and the third network function respectively correspond to a profile 1, a profile 2, and a profile 3. The requesting network function may obtain the profile 1 of the first network function from the NRF, where the profile 1 includes an instance identifier 2 of the second network function and an instance identifier 3 of the third network function. For example, the requesting network function needs to obtain a profile (that is, the profile 2 of the second network function) of a network function corresponding to a network function type 2. The requesting network function may send the instance identifier 2 and the instance identifier 3 to the NRF, and the NRF sends, to the requesting network function, the profile 2 and the profile 3 that respectively correspond to the instance identifier 2 and the instance identifier 3. Further, the profile 2 includes the instance identifier 2 and the network function type 2 of the second network function, and the profile 3 includes the instance identifier 3 and a network function type 3 of the third network function. After receiving the profile 2 and the profile 3 from the NRF, the requesting network function may determine that a network function type in the profile 2 is the network function type 2, that is, select the profile 2.

Case B: The profile of the first network function includes the instance identifiers of the one or more other network functions and network function types corresponding to the instance identifiers of the one or more other network functions.

In the case B, the first network function may request the profile of the second network function corresponding to the second network function type from the NRF based on the instance identifiers of the one or more other network functions and the network function types corresponding to the instance identifiers of the one or more other network functions. For details, refer to step 303B and step 304B in FIG. 3.

Step 303B: The requesting network function sends the instance identifier and the second network function type of the second network function to the NRF.

The first network function determines the instance identifier of the second network function corresponding to the second network function type based on the instance identifiers of the one or more other network functions and the network function types corresponding to the instance identifiers of the one or more other network functions, and sends the instance identifier and the second network function type of the second network function to the NRF.

In an optional implementation, the first network function may send a second discovery request to the NRF, where the second discovery request includes the instance identifier and the second network function type of the second network function, and the second discovery request is used by the requesting network function to request the profile of the second network function corresponding to the instance identifier of the second network function from the NRF.

It should be understood that, in step 303B, if the network function type that needs to be requested by the requesting network function is not included in the network function types of the one or more other network functions in the profile of the first network function, the requesting network function may no longer perform NRF query based on the instance identifier and the network function type in the profile of the first network function. This helps reduce unnecessary signaling interaction between the requesting network function and the network repository function.

Step 304B: The NRF sends the profile of the second network function to the first network function.

For example, the NRF may perform authentication on the requesting network function based on the type of the second network function, determine the profile of the second network function corresponding to the instance identifier of the second network function after the authentication succeeds, and send the profile of the second network function to the requesting network function. For example, the NRF is authorized to allow a requesting network function whose network function type is an AMF to discover a second network function whose network function type is an SMF, but does not allow a requesting network function of another network function type to discover the SMF. The NRF determines, based on the network function type of the requesting network function and the type of the second network function, whether to allow the requesting network function to discover the second network function.

In an optional implementation, the NRF may send a second discovery response corresponding to the second discovery request to the first network function, where the second discovery response includes the profile of the second network function corresponding to the instance identifier of the second network function in the second discovery request.

Based on the foregoing examples of step 303B and step 304B, the first network function, the second network function, and a third network function are co-deployed, and the first network function, the second network function, and the third network function respectively correspond to a profile 1, a profile 2, and a profile 3. The requesting network function may obtain the profile 1 of the first network function from the NRF, where the profile 1 includes an instance identifier 2 and a network function type 2 of the second network function and an instance identifier 3 and a network function type 3 of the third network function. For example, the requesting network function needs to obtain a profile (that is, the profile 2 of the second network function) of a network function corresponding to the network function type 2. The requesting network function may send the instance identifier 2 and the network function type 2 to the NRF. Correspondingly, the NRF sends the profile 2 of the network function type 2 corresponding to the instance identifier 2 to the requesting network function.

In this manner, signaling interaction between the requesting network function and the NRF can be reduced, and a rate at which the requesting network function determines the second network function can be increased.

To better explain this embodiment of this application, the following uses an example with reference to a specific scenario. The first network function is an SMF, the second network function is a BSF, the SMF is co-deployed with the BSF, and the requesting network function is an AMF.

In a network element registration process:
The SMF sends an SMF registration request to the NRF. The SMF registration request includes a profile of the SMF, and the profile of the SMF includes an instance identifier (for example, an NF Instance ID 1) of the BSF. The NF Instance ID 1 may indicate that a network function that is co-deployed with the SMF exists. Further, the profile of the SMF further includes network element information of the SMF, for example, an instance identifier (for example, an NF Instance ID 2) of the SMF, a network function type (for example, an SMF type) of the SMF, service location information, a data network name list, and slice list information. The profile of the SMF further includes service information of the SMF, for example, a service name, version information, a service instance identifier, a service priority, a service capacity, and service load. Correspondingly, the NRF stores the profile of the SMF, and sends a registration success response to the SMF.

The BSF sends a BSF registration request to the NRF, and the BSF registration request includes a profile of the BSF. The profile of the BSF includes the instance identifier (for example, the NF Instance ID 2) of the SMF. The NF Instance ID 2 may indicate that a network function that is co-deployed with the BSF exists, and an identifier of the network function is the NF Instance ID 2. Further, the profile of the BSF further includes network element information of the BSF, for example, an instance identifier (for example, the NF Instance ID 1) of the BSF, a network function type (for example, a BSF type) of the BSF, a supported IP address list, and a supported slice list. The profile of the SMF further includes service information of the SMF, for example, a service name, version information, a service instance identifier, a service priority, a service capacity, and service load. Correspondingly, the NRF stores the profile of the BSF, and sends a registration success response to the BSF.

In a network element discovery process:
In a PDU session establishment procedure, the AMF sends an SMF type (that is, the first network function type) to the NRF. The SMF type is used by the AMF to request a profile (that is, the profile of the first network function corresponding to the first network function type) of the SMF corresponding to the SMF type from the NRF. In addition, the AMF may further send, to the NRF, a first parameter for selecting the SMF. The first parameter is, for example, current location information of a terminal device, a slice instance identifier corresponding to a PDU session, and a network data name. The NRF sends a profile of the SMF corresponding to the SMF type and the first parameter to the AMF based on the SMF type and the first parameter from the AMF. The AMF may establish the PDU session for the terminal device based on the profile of the SMF from the NRF.

Subsequently, when the AMF further needs to select a BSF for maintaining a correspondence between a user IP address and a serving network element function, and a preconfigured policy on the AMF requires to select a BSF combined with the SMF, the AMF may further send an NF Instance ID 1 to the NRF based on the profile of the SMF from the NRF, where the NF Instance ID 1 is used by the AMF to request a profile corresponding to the NF Instance ID 1 from the NRF. The NRF sends the profile corresponding to the NF Instance ID 1 to the AMF. After receiving the profile of the BSF, the AMF determines, based on the NF Instance ID 1 and a network function type BSF in the profile of the BSF, combined deployment of the SMF and the BSF. The AMF selects the BSF to maintain the correspondence between the user IP address and the serving network element function.

In addition, in another network registration process, a profile of the SMF may further include a network function type (that is, a BSF type) corresponding to an instance identifier (that is, an NF Instance ID 1) of the BSF. The profile of the BSF may further include a network function type (that is, an SMF type) corresponding to an instance identifier (that is, an NF Instance ID 2) of the SMF.

Correspondingly, in another network element discovery process:
In a PDU session establishment procedure, the AMF sends an SMF type to the NRF. The SMF type is used by the AMF to request a profile of the SMF corresponding to the SMF type from the NRF. In addition, the AMF may further send, to the NRF, a first parameter for selecting an SMF. The NRF may send a profile of the SMF corresponding to the SMF type and the first parameter to the AMF based on the SMF type and the first parameter from the AMF. The AMF may establish a PDU session for a terminal device based on the profile of the SMF from the NRF.

Subsequently, when the AMF further needs to select a BSF for maintaining a correspondence between a user IP address and a serving network element function, and a preconfigured policy on the AMF requires to select a BSF combined with the SMF, the AMF may further determine, based on an NF Instance ID 1 and a BSF type in the profile of the SMF, combined deployment of the SMF and the BSF, and send the NF Instance ID 1 and the BSF type to the NRF, so that the AMF requests a profile of the BSF corresponding to the NF Instance ID 1 from the NRF. The NRF sends the profile of the BSF corresponding to the NF Instance ID 1 to the AMF. The AMF selects the BSF to maintain the correspondence between the user IP address and the serving network element function.

It may be understood that, if a network function type corresponding to an instance identifier (namely, the NF Instance ID 1) included in the profile of the SMF does not include the BSF type, the AMF does not trigger NRF query that is based on the instance identifier and the network function type. This helps reduce unnecessary signaling interaction between the AMF and NRF.

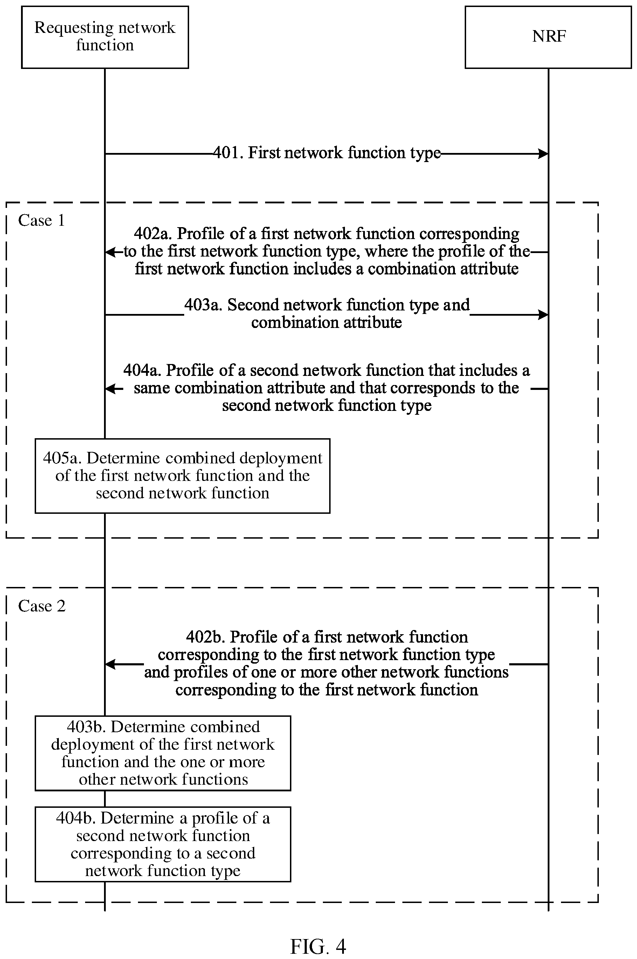

FIG. 4 is a schematic flowchart of an example of discovering a first network function and a second network function by a requesting network function from an NRF when a first indication includes a combination attribute according to this application. In a procedure of FIG. 4:
Step 401: The requesting network function sends a first network function type to the NRF.

The first network function type is used by the requesting network function to request a profile of the first network function corresponding to the first network function type from the NRF. In an optional implementation, the requesting network function may further send a first parameter to the NRF. The first parameter is a parameter other than the first network function type and for requesting the first network function.

In an optional implementation, the requesting network function sends a first discovery request to the NRF, where the first discovery request includes the first network function type and the first parameter, and the first discovery request is used by the requesting network function to request the profile of the first network function from the NRF. In addition, the requesting network function may alternatively include the first network function type and the first parameter in a plurality of different requests, and the plurality of different requests are used by the requesting network function to request the profile of the first network function from the NRF.

For the implementations that are not described in detail in step 401, refer to the descriptions in step 301.

Profiles of a plurality of network functions are registered in the NRF. The profile of each network function may include network element information, service information, and the like of the network function. Further, when a network function is co-deployed with another network function, a profile of the network function may further include a combination indication corresponding to the network function. In this scenario, the combination indication corresponding to the network function may specifically include a combination attribute corresponding to the network function. A network function corresponding to a profile including a same combination attribute is co-deployed.

After the NRF receives the first network function type from the requesting network function, the NRF may send the profile of the first network function corresponding to the first network function type to the requesting network function in two implementations.

Case 1: The NRF may send the profile of the first network function corresponding to the first network function type to the requesting network function, but may not send profiles of one or more other network functions to the requesting network function. For details, refer to step 402a to step 405a in FIG. 4.

Step 402a: The NRF sends the profile of the first network function corresponding to the first network function type to the requesting network function. The profile of the first network function includes the first indication, and the first indication includes the combination attribute.

The NRF sends the profile of the first network function corresponding to the first network function type to the requesting network function based on the first network function type or based on the first network function type and the first parameter. For a specific determining manner, refer to the descriptions in step 302. Details are not described again.

Step 403a: The requesting network function sends a second network function type and the combination attribute in the profile of the first network function to the NRF.

After receiving the profile of the first network function from the NRF, when needing to select a second network function that is co-deployed with the first network function, the requesting network function may send the second network function type and the combination attribute in the profile of the first network function to the NRF. The second network function type and the combination attribute are used by the requesting network function to request, from the NRF, a profile of the second network function that also includes the same combination attribute and that corresponds to the second network function type.

In an optional implementation, the requesting network function may send a third discovery request to the NRF, where the third discovery request includes the second network function type and the combination attribute. In addition, the requesting network function may alternatively send the second network function type and the combination attribute to the NRF by respectively using two requests. This is not limited in this application.

Step 404a: The NRF sends, to the requesting network function, the profile of the second network function that includes the same combination attribute and that corresponds to the second network function type.

In an optional implementation, the NRF may determine that the currently registered profiles of the network function include a profile that has a same combination attribute as the profile of the first network function, and then determine, from the profiles, the profile that includes the second network function type, that is, the profile of the second network function. The NRF may alternatively determine that the currently registered profiles of the network function include the profile of the second network function type, and then determine, from the profiles, the profile that includes the same combination attribute as the profile of the first network function.

In an optional implementation, the NRF may send a third discovery response corresponding to the third discovery request to the first network function, where the third discovery response includes the profile of the second network function that has a same combination attribute as that in the third discovery request and that corresponds to the second network function type.

Step 405a: The requesting network function determines combined deployment of the first network function and the second network function based on the combination attribute in the profile of the first network function and the combination attribute in the profile of the second network function.

It should be noted that the NRF may determine profiles of one or more first network functions based on the first network function type of the requesting network function. The NRF may send the profiles of the one or more first network functions to the requesting network function.

Correspondingly, in an example, the requesting network function may request the profile of the second network function corresponding to each first network function from the NRF based on the combination attribute in the profile of each first network function. The requesting network function further determines, based on the combination attribute in the profile of each first network function and the combination attribute in the profile of the second network function corresponding to each first network function, that a network function corresponding to a profile including a same combination attribute is co-deployed. The requesting network function determines, from the profiles of a plurality of first network functions and the profile of the second network function corresponding to each first network function, the profile of the first network function and the profile of the second network function that are for network communication.

In another example, the requesting network function may alternatively first determine a profile of one first network function from the profiles of a plurality of first network functions, and then request the profile of the second network function corresponding to the first network function from the NRF based on a combination attribute in the profile of the first network function.

Based on the foregoing examples from step 402a to step 405a, the first network function, the second network function, and a third network function are co-deployed, and the first network function, the second network function, and the third network function respectively correspond to a profile 1, a profile 2, and a profile 3. The profile 1, the profile 2, and the profile 3 include a same combination attribute 1. After obtaining the profile 1 from the NRF, the requesting network function may obtain the combination attribute 1 from the profile 1. Further, for example, the requesting network function needs to obtain a profile (that is, the profile 2 of the second network function) of a network function corresponding to a network function type 2. The requesting network function may send the combination attribute 1 and the network function type 2 to the NRF. Correspondingly, the NRF may determine, from the profiles based on the combination attribute 1 and the network function type 2, the profile 2 that also includes the combination attribute 1 and that corresponds to the network function type 2, and send the profile 2 to the requesting network function. The requesting network function receives the profile 2 from the NRF, and determines combined deployment of the second network function and the first network function based on the combination attribute 1 in the profile 2 of the second network function and the combination attribute 1 in the profile 1 of the first network function.

Case 2: The network repository function may send the profile of the first network function corresponding to the first network function type to the requesting network function, and send profiles of one or more other network functions to the requesting network function. For details, refer to step 402b to step 405b in FIG. 4.

Step 402b: The NRF sends the profile of the first network function corresponding to the first network function type and the profiles of the one or more other network functions corresponding to the first network function to the requesting network function.

Combination attributes in the profiles of the one or more network functions corresponding to the first network function are the same as the combination attribute in the profile of the first network function. In a specific implementation, the NRF may determine, based on the combination attribute in the profile of the first network function, the profiles of the one or more other network functions that also include the combination attribute, and send the profile of the first network function and the profiles of the one or more other network functions to the requesting network function.

In an example, the NRF may send a first discovery response to the requesting network function, where the first discovery response includes the profile of the first network function and the profiles of the one or more other network functions. In another example, the profile of the first network function and the profiles of the one or more other network functions are respectively carried in corresponding messages and sent to the requesting network function.

Step 403b: The requesting network function determines combined deployment of the first network function and the one or more other network functions.

In a specific implementation, after receiving the profile of the first network function and receiving the profiles of the one or more other network functions, the requesting network function determines that the combination attribute in the profile of the first network function is the same as the combination attributes in the profiles of the one or more other network functions, and then determines the combined deployment of the first network function and the one or more other network functions.

Step 404b: The requesting network function determines a profile of the second network function corresponding to a second network function type from the profiles of the one or more other network functions.

It should be noted that, in the foregoing steps, the NRF may determine profiles of a plurality of first network functions based on the first network function type in the requesting network function. In this case, the NRF may send, for any first network function in the plurality of first network functions, a profile of the first network function and profiles of one or more other network functions corresponding to the first network function to the requesting network function. The requesting network function may determine, based on the combination attributes in the received profiles of the network functions, that a network function corresponding to a profile including a same combination attribute is co-deployed. The requesting network function then determines, from the profiles of the plurality of first network functions and the profiles of the one or more other network functions corresponding to each first network function, the profile of the first network function and the profile of the second network function that are for network communication.

Based on the foregoing examples from step 402b to step 404b, in one network function combined deployment, the first network function is co-deployed with the second network function. The first network function is represented as a network function 0, and the network function 0 corresponds to a profile 0. The second network function is represented as a network function 1, and corresponds to a profile 1. The profile 0 and the profile 1 include a same combination attribute 1. In another network function combined deployment, the first network function is co-deployed with the second network function. The first network function is represented as a network function 2, and the network function 2 corresponds to a profile 2. The second network function is represented as a network function 3, and corresponds to a profile 3. The profile 2 and the profile 3 include a same combination attribute 2. A network function type of the network function 0 is the same as a network function type of the network function 2, which is, for example, a network function type 0. The requesting network function sends the network function type 0 to the NRF, and the NRF sends the profile 0, the profile 1, the profile 2, and the profile 3 to the requesting network function based on the network function type 0. Correspondingly, the requesting network function may determine combined deployment of the network function 0 corresponding to the profile 0 and the network function 1 corresponding to the profile 1 based on the combination attribute 1 in the profile 0 and the combination attribute 1 in the profile 1. The requesting network function may determine combined deployment of the network function 2 corresponding to the profile 2 and the network function 3 corresponding to the profile 3 based on the combination attribute 2 in the profile 2 and the combination attribute 2 in the profile 3. The requesting network function may select the network function 0 corresponding to the profile 0 and the network function 1 corresponding to the profile 1, or may select the network function 2 corresponding to the profile 2 and the network function 3 corresponding to the profile 3.

To better explain this embodiment of this application, the following uses an example with reference to a specific scenario. The first network function is an SMF, the second network function is a BSF, the SMF is co-deployed with the BSF, and the requesting network function is an AMF. In a network element registration process:
The SMF sends an SMF registration request to the NRF, and the SMF registration request includes a profile of the SMF. The profile of the SMF includes a combination attribute a, and the combination attribute a indicates that a network function that is co-deployed with the SMF exists. Further, the profile of the SMF further includes network element information of the SMF, for example, an instance identifier (for example, an NF Instance ID 2) of the SMF, a network function type (for example, an SMF type) of the SMF, service location information, a data network name list, and slice list information. The profile of the SMF further includes service information of the SMF, for example, a service name, version information, a service instance identifier, a service priority, a service capacity, and service load. Correspondingly, the NRF stores the profile of the SMF, and sends a registration success response to the SMF.

The BSF sends a BSF registration request to the NRF, and the BSF registration request includes a profile of the BSF. The profile of the BSF includes the combination attribute a, and the combination attribute a indicates that a network function that is co-deployed with the BSF exists. Further, the profile of the BSF further includes network element information of the BSF, for example, an instance identifier (for example, an NF Instance ID 1) of the BSF, a network function type (for example, a BSF type) of the BSF, service location information, a data network name list, and slice list information. The profile of the BSF further includes service information of the BSF, for example, a service name, version information, a service instance identifier, a service priority, a service capacity, and service load. Correspondingly, the NRF stores the profile of the BSF, and sends a registration success response to the BSF.

In the foregoing solution, if the SMF and the BSF are co-deployed with a new NF subsequently, only the new NF needs to register a same combination attribute, that is, the combination attribute a, with the NRF by using the foregoing method, and the profile registered by the SMF and the BSF with the NRF does not need to be modified, thereby having better forward compatibility and scalability.

Correspondingly, in a network element discovery process:
In a PDU session establishment procedure, the AMF may send an SMF type (that is, the first network function type) to the NRF. The SMF type is used by the AMF to request a profile (that is, the profile of the first network function corresponding to the first network function type) of the SMF corresponding to the SMF type from the NRF. In addition, the AMF may further send, to the NRF, a first parameter for selecting the SMF. The first parameter is, for example, current location information of a terminal device, a slice instance identifier corresponding to a PDU session, and a network data name. The NRF sends the profile of the SMF corresponding to the SMF type to the AMF based on the SMF type and the first parameter from the AMF. The AMF may establish the PDU session for the terminal device based on the profile of the SMF from the NRF.

Subsequently, when the AMF further needs to select a BSF for maintaining a correspondence between a user IP address and a serving network element function, and a preconfigured policy requires to select a BSF co-deployed with the SMF, the AMF may send the combination attribute a and a BSF type to the NRF based on the profile of the SMF from the NRF, where the combination attribute a and the BSF type are used by the AMF to request, from the NRF, a profile that includes the combination attribute a and that corresponds to the BSF type. Correspondingly, the NRF sends, to the AMF, the profile that includes the combination attribute a and that corresponds to the BSF type, that is, a profile of the BSF. The AMF determines combined deployment of the SMF and the BSF based on the combination attribute a in the profile of the SMF and the combination attribute a in the profile of the BSF. The AMF selects the BSF to maintain the correspondence between the user IP address and the serving network element function.

In addition, the NRF may not only send the profile of the SMF to the AMF, but also send the profile of the BSF that has the same combination attribute a as the profile of the SMF to the AMF. Correspondingly, the AMF may determine the combined deployment of the SMF and the BSF based on the combination attribute a in the profile of the SMF and the combination attribute a in the profile of the BSF. The AMF and the BSF that are in the combined deployment function are selected.

It should be noted that, the requesting network function may further send a combined network function preference indication to the NRF, where the combined network function preference indication indicates the NRF to preferentially select, for the requesting network function, a profile of a network function that includes a combination indication. Specifically, the network function preference indication may indicate the requesting network function to: when the profile of the network function includes the combination indication, receive, from the NRF, the profile of the network function that includes the combination indication; or when the profile of the network function does not include the combination indication, receive, from the NRF, the profile of the network function that does not include the combination indication. Correspondingly, the NRF may further receive the combined network function preference indication sent by the requesting network function, where the combined network function preference indication indicates the NRF to preferentially select, for the requesting network function, the profile of the network function that includes the combination indication. Specifically, the network function preference indication may indicate to: when the profile of the network function includes the combination indication, send the profile of the network function that includes the combination indication to the requesting network function; or when the profile of the network function does not include the combination indication, send the profile of the network function that does not include the combination indication to the requesting network function.

This is explained as follows. The requesting network function sends the first network function type and the combined network function preference indication to the NRF. The NRF first determines whether a profile of a network function that corresponds to the first network function type and includes the combination indication (that is, the first indication) exists in the current profile of the network function. If the profile of the network function that corresponds to the first network function type and includes the combination indication exists, the NRF may feed back, to the requesting network function, the profile of the network function that corresponds to the first network function type and includes the combination indication. In this example, if the NRF determines that only a profile of a network function that corresponds to the first network function type but does not include the combination indication exists, the NRF may feed back, to the requesting network function, the profile of the network function that corresponds to the first network function type but does not include the combination indication.

In addition, the requesting network function sends the second network function type, the combination indication, and the combined network function preference indication to the NRF. The NRF first determines whether a profile of a network function that includes the second network function type and the combination indication exists in the current profile of the network function. If the profile of the network function that includes the second network function type and the combination indication exists, the NRF may feed back, to the requesting network function, the profile of the network function that corresponds to the second network function type and the combination indication. In this example, if the NRF determines that only a profile of a network function that corresponds to the second network function type but does not include the combination indication exists, the NRF may feed back, to the requesting network function, the profile of the network function that corresponds to the second network function type but does not include the combination indication.

In this application, the requesting network function sends the combined network function preference indication to the NRF, to indicate the NRF to preferentially select the profile of the network function that includes the combination indication. This helps avoid a problem that communication of the terminal device is interrupted because the NRF does not feed back the profile of the network function to the requesting network function when the profile of the network function does not include the combination indication, and helps improve a success rate in which the requesting network function obtains the profile of the network function through requesting.

In the foregoing technical solution, the requesting network function requests, from the network repository function, the profile of the first network function having the first network function type. The profile of the first network function includes the first indication, where the first indication indicates the combined deployment of the first network function and the second network function, so that the requesting network function may determine combined deployment of the first network function and another network function. In this manner, the requesting network function requests, from the network repository function, a network function that is co-deployed with another network function. This helps implement combined deployment of a plurality of network functions, reduce deployment costs and complexity, and provide a more flexible network function deployment manner. In addition, a communication delay between the first network function and the second network function that are co-deployed is short. This helps optimize service experience of the terminal device. The foregoing technical solution may provide a general method for discovering the co-deployed network function, and any type of network function that is co-deployed in a 5G network may be discovered by the requesting network function by using the foregoing technical solution.

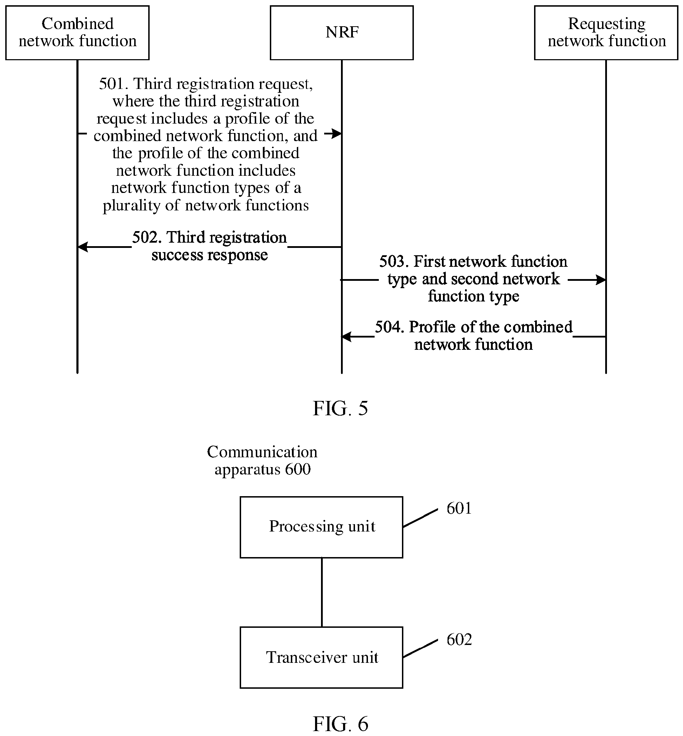

This application further provides another registration procedure. Different from registering the profile of the first network function by the first network function with the NRF in FIG. 2, in this application, a combined network function may register a profile of the combined network function with an NRF. For details, refer to a registration flowchart shown in FIG. 5.

Step 501: The combined network function sends a third registration request to the NRF.

The third registration request includes the profile of the combined network function, and the profile of the combined network function may include network function types of a plurality of network functions in the combined network function. The network function types of the plurality of network functions indicate that the plurality of network functions are co-deployed in the combined network function. For example, if the profile of the combined network function includes a first network function type and one or more other network function types, it indicates that network functions respectively corresponding to the first network function type and the one or more other network function types are co-deployed in the combined network function.

Step 502: The NRF sends a third registration success response to the combined network function. For example, after storing the profile of the combined network function, the NRF may send the third registration success response to the combined network function, where the third registration success response indicates that the profile of the combined network function has been successfully registered.

In this application, the network function types of the plurality of network functions in the profile of the combined network function may alternatively be understood as a combination indication. The combination indication herein indicates that the plurality of network functions are deployed in the combined network function.

In a discovery procedure, a requesting network function may discover a first network function and a second network function from the NRF based on the network function types of the plurality of network functions in the profile of the combined network function.

Step 503: The requesting network function sends the first network function type and a second network function type to the NRF.

The first network function type and the second network function type are used by the requesting network function to request, from the NRF, a profile of the combined network function corresponding to the first network function type and the second network function type. A plurality of network function types in the profile include the first network function type and the second network function type.

In this application, the requesting network function may further send a second parameter to the NRF, where the second parameter is a parameter other than the first network function type and the second network function type and for determining the profile of the combined network function. For example, the second parameter is location information of a terminal device, a service network identifier, a slice identifier corresponding to a PDU session, a network data name, or the like.

In an optional implementation, the requesting network function sends a fourth discovery request to the NRF, where the fourth discovery request includes the first network function type, the second network function type, and the second parameter, and the fourth discovery request is used by the requesting network function to request, from the NRF, the profile of the combined network function corresponding to the first network function type and the second network function type. In addition, the requesting network function may alternatively first send the first network function type and the second network function type to the NRF, and then send the second parameter to the NRF, or in another manner.

Step 504: The NRF sends the profile of the combined network function corresponding to the first network function type and the second network function type to the requesting network function.

In this application, not only a profile of a single network function may be registered, but also profiles of a plurality of combined network functions may be registered with the NRF. The profile of each combined network function may include the network function types of the plurality of network functions deployed in the combined network function, network element information of the combined network function, service information respectively corresponding to the plurality of network functions, and the like.

In an optional implementation, the NRF may determine, based on the first network function type and the second network function type that are requested by the requesting network function, the profile of the combined network function that includes both the first network function type and the second network function type, and send the profile of the combined network function that includes both the first network function type and the second network function type to the requesting network function. In an optional implementation, the NRF may further receive the second parameter sent by the requesting network function, and determine the profile of the combined network function corresponding to the first network function type and the second network function type based on the first network function type, the second network function type, and the second parameter.

In an optional implementation, the NRF may receive the fourth discovery request from the requesting network function, and determine the profile of the corresponding combined network function based on the first network function type, the second network function type, and the second parameter in the fourth discovery request. Alternatively, the NRF may receive a plurality of requests from the requesting network function, and determine the profile of the corresponding combined network function based on the first network function type, the second network function type, and the second parameter obtained from the plurality of requests.

In an optional implementation, the NRF may include the determined profile of the combined network function in a fourth discovery response corresponding to the fourth discovery request, and send the fourth discovery response to the requesting network function.

In this application, if the NRF fails to determine the profile of the combined network function that includes both the first network function type and the second network function type, the NRF may further send a profile of the first network function corresponding to the first network function type to the requesting network function, and send a profile of the second network function corresponding to the second network function type to the requesting network function.

In the foregoing example, only an example in which the requesting network function sends two function types (that is, the first network function type and the second network function type) to the NRF is used. This application is also applicable to a scenario in which the requesting network function sends a plurality of network function types to the NRF. For example, a plurality of combined network functions are deployed in the NRF, and include a combined network function 1 and a combined network function 2. A profile of the combined network function 1 includes a network function type a, a network function type b, and a network function type c that respectively correspond to a network function 11, a network function 12, and a network function 13. A profile of the combined network function 2 includes the network function type a and the network function type b that respectively correspond to a network function 21 and a network function 22. For example, if an AMF sends the network function type a, the network function type b, and the network function type c to the NRF, the NRF may send the profile of the combined network function 1 to the AMF. For another example, if the AMF sends the network function type a and the network function type b to the NRF, the NRF may send the profile of the combined network function 1 and/or the combined network function 2 to the AMF.

To better explain this embodiment of this application, the following describes the method in this application with reference to a specific scenario. The first network function is an NSSF, the second network function is an NSSAAF, the NSSF and the NSSAAF are co-deployed in a combined network function B, and the requesting network function is an AMF.

In a network element registration process:
The combined network function B sends a registration request of the combined network function B to the NRF, where the registration request of the combined network function B includes a profile of the combined network function B, the profile of the combined network function B includes an NSSF type and an NSSAAF type, and the NSSF type and the NSSAAF type indicate that the NSSF and the NSSAAF are co-deployed in the combined network function B. Further, the profile of the combined network function B further includes network element information of the combined network function B, service information of the NSSF, and service information of the NSSAAF. For example, the network element information of the combined network function B includes an instance identifier (for example, an NF Instance ID 3) corresponding to both the first network function and the second network function, service location information, a supported slice list, a service network identifier, and the like. The service information of the NSSF includes a service name, a service version, a service IP address, a service instance identifier, and the like that are supported by the NSSF. The service information of the NSSAAF includes a service name, a service version, a service IP address, a service instance identifier, and the like that are supported by the NSSAAF. Correspondingly, the NRF stores the profile of the combined network function B, and sends a registration success response to the combined network function B.

In a network element discovery process:
The AMF sends an NSSF type and an NSSAAF type to the NRF, so that the AMF requests a profile of the combined network function B corresponding to the NSSF type and NSSAAF type from the NRF. In addition, the AMF may further send, to the NRF, a second parameter for selecting a combined network function, where the second parameter may be location information of a terminal device, a slice identifier, a network identifier, or the like. The NRF sends the profile of the combined network function B to the AMF based on the NSSF type, the NSSAAF type, and the second parameter from the AMF. The AMF may select the NSSF and the NSSAAF based on the profile of the combined network function B from the NRF.

In the foregoing technical solution, the requesting network function requests, from the network repository function, the profile of the combined network function having the first network function type and the second network function type. The profile is a profile of combined deployment of the first network function corresponding to the first network function type and the second network function corresponding to the second network function type. In this way, combined deployment of a plurality of network functions is implemented, and the requesting network function may obtain the profile of the combined network function through requesting. This helps reduce deployment costs and complexity, and provide a more flexible network function deployment manner. In addition, a communication delay between the first network function and the second network function that are co-deployed is short. This helps optimize service experience of the terminal device. The foregoing technical solution may provide a general method for discovering the co-deployed network function, and any type of network function that is co-deployed in a 5G network may be discovered by the requesting network function by using the foregoing technical solution.

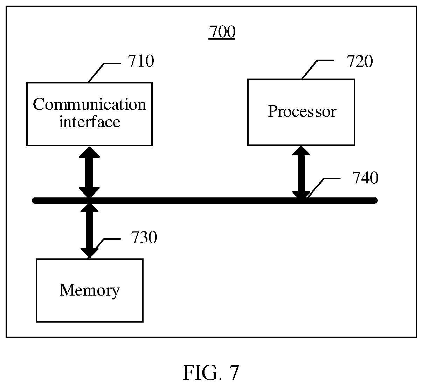

Based on the foregoing content and a same concept, FIG. 6 and FIG. 7 are a schematic diagram of a structure of a possible communication apparatus according to this application. The communication apparatuses may be configured to implement a function of the network repository function, the requesting network function, the first network function, or the combined network function in the foregoing method embodiments, and therefore can also implement beneficial effects of the foregoing method embodiments.

As shown in FIG. 6, the communication apparatus 600 includes a processing unit 601 and a transceiver unit 602.

When the communication apparatus 600 is configured to implement a function of the network repository function in the method embodiments related to FIG. 2 to FIG. 4,
the processing unit 601 is configured to control the transceiver unit 602 to receive a first network function type from a requesting network function.

The processing unit 601 is configured to control the transceiver unit 602 to send a profile of a first network function corresponding to the first network function type to the requesting network function, where the profile of the first network function includes a first indication, the first indication indicates combined deployment of the first network function and a second network function, and the first network function and the second network function have different network function types.

In a possible implementation, the first indication includes an instance identifier of the second network function.

In a possible implementation, the processing unit 601 is further configured to control the transceiver unit 602 to receive an instance identifier of the second network function from the requesting network function; and send a profile of the second network function corresponding to the instance identifier of the second network function to the requesting network function.

In a possible implementation, the first indication further includes a second network function type of the second network function. The processing unit 601 is further configured to control the transceiver unit 602 to receive the second network function type from the requesting network function.

In a possible implementation, the first indication includes a combination attribute.

In a possible implementation, the processing unit 601 is further configured to control the transceiver unit 602 to send a profile of the second network function to the requesting network function, where the profile of the second network function includes the combination attribute.

In a possible implementation, the processing unit 601 is further configured to control the transceiver unit 602 to receive the combination attribute and a second network function type of the second network function from the requesting network function.

In a possible implementation, the processing unit 601 is further configured to control the transceiver unit 602 to receive a first registration request from the first network function, where the first registration request includes the profile of the first network function; and send a first registration success response to the first network function.

In a possible implementation, the processing unit 601 is further configured to control the transceiver unit 602 to receive a combined network function preference indication from the requesting network function, where the combined network function preference indication indicates the transceiver unit 602 to: when a profile of a network function includes a combination indication, send the profile of the network function that includes the combination indication to the requesting network function; or when a profile of a network function does not include a combination indication, send the profile of the network function that does not include the combination indication to the requesting network function.

When the communication apparatus 600 is configured to implement a function of the requesting network function in the method embodiments related to FIG. 2 to FIG. 4,
the processing unit 601 is configured to control the transceiver unit 602 to send a first network function type to a network repository function.

The processing unit 601 is further configured to control the transceiver unit 602 to receive a profile of a first network function corresponding to the first network function type from the network repository function, where the profile of the first network function includes a first indication, the first indication indicates combined deployment of the first network function and a second network function, and the first network function and the second network function have different network function types.

In a possible implementation, the first indication includes an instance identifier of the second network function.

In a possible implementation, the processing unit 601 is further configured to control the transceiver unit 602 to send an instance identifier of the second network function to the network repository function; and receive a profile of the second network function corresponding to the instance identifier of the second network function from the network repository function.

In a possible implementation, the first indication further includes a second network function type of the second network function. The processing unit 601 is further configured to: determine the combined deployment of the first network function and the second network function based on the second network function type, and control the transceiver unit 602 to send the second network function type to the network repository function.

In a possible implementation, the first indication includes a combination attribute.

In a possible implementation, the processing unit 601 is further configured to control the transceiver unit 602 to receive a profile of the second network function from the network repository function, where the profile of the second network function includes the combination attribute.

In a possible implementation, the processing unit 601 is further configured to control the transceiver unit 602 to send the combination attribute and a second network function type of the second network function to the network repository function.

In a possible implementation, the processing unit 601 is further configured to determine the combined deployment of the first network function and the second network function based on the combination attribute in the profile of the second network function and a combination attribute in the profile of the first network function.

In a possible implementation, the processing unit 601 is further configured to: control the transceiver unit 602 to send a combined network function preference indication to the network repository function, where the combined network function preference indication indicates the transceiver unit 602 to: when a profile of a network function includes a combination indication, receive the profile of the network function that includes the combination indication from the network repository function; or when a profile of a network function does not include a combination indication, receive the profile of the network function that does not include the combination indication from the network repository function.

When the communication apparatus 600 is configured to implement a function of the first network function in the method embodiments related to FIG. 2 to FIG. 4,
the processing unit 601 is configured to control the transceiver unit 602 to send a first registration request to a network repository function, where the first registration request includes a profile of the first network function, the profile of the first network function includes a first indication, the first indication indicates combined deployment of the first network function and a second network function, and the first network function and the second network function have different network function types; and receive a first registration success response from the network repository function.

When the communication apparatus 600 is configured to implement a function of the network repository function in the method embodiment related to FIG. 5,
the processing unit 601 is configured to: control the transceiver unit 602 to receive a first network function type and a second network function type that are from a requesting network function; and send a combined network function profile to the requesting network function, where the combined network function profile is a profile of combined deployment of a first network function corresponding to the first network function type and a second network function corresponding to the second network function type, and the first network function type is different from the second network function type.

In a possible implementation, the processing unit 601 is further configured to control the transceiver unit 602 to receive a third registration request from a combined network function, where the third registration request includes the combined network function profile, and the combined network function profile includes the first network function type and the second network function type; and send a second registration success response to the combined network function.

In a possible implementation, the combined network function profile further includes an instance identifier corresponding to both the first network function and the second network function.

When the communication apparatus 600 is configured to implement a function of the requesting network function in the method embodiment related to FIG. 5,
the processing unit 601 is configured to control the transceiver unit 602 to send a first network function type and a second network function type to a network repository function; and receive a combined network function profile from the network repository function, where the combined network function profile is a profile of combined deployment of a first network function corresponding to the first network function type and a second network function corresponding to the second network function type, and the first network function type is different from the second network function type.

In a possible implementation, the combined network function profile further includes an instance identifier corresponding to both the first network function and the second network function.

When the communication apparatus 600 is configured to implement a function of the combined network function in the method embodiment related to FIG. 5,
the processing unit 601 is configured to control the transceiver unit 602 to send a third registration request to a network repository function, where the third registration request includes a combined network function profile, the combined network function profile is a profile of combined deployment of a first network function corresponding to a first network function type and a second network function corresponding to a second network function type, and the first network function type is different from the second network function type; and receive a third registration success response from the network repository function.

FIG. 7 shows an apparatus 700 according to an embodiment of this application. The apparatus shown in FIG. 7 may be an implementation of a hardware circuit of the apparatus shown in FIG. 6. The apparatus is applicable to the foregoing flowchart, and performs functions in the foregoing method embodiments. For ease of description, FIG. 7 shows only main components of the apparatus.

The apparatus 700 shown in FIG. 7 includes a communication interface 710, a processor 720, and a memory 730. The memory 730 is configured to store program instructions and/or data. The processor 720 may operate in collaboration with the memory 730. The processor 720 may execute the program instructions stored in the memory 730. When the instructions or the program stored in the memory 730 is executed, the processor 720 is configured to perform an operation performed by the processing unit 601 in the foregoing embodiments, and the communication interface 710 is configured to perform an operation performed by the transceiver unit 602 in the foregoing embodiments.

The memory 730 is coupled to the processor 720. The coupling in this embodiment of this application is indirect coupling or a communication connection between apparatuses, units, or modules in an electrical form, a mechanical form, or another form, and is for information exchange between the apparatuses, the units, or the modules. At least one of the memories 730 may be included in the processor 720.

In this embodiment of this application, the communication interface may be a transceiver, a circuit, a bus, a module, or another type of communication interface. In this embodiment of this application, when the communication interface is a transceiver, the transceiver may include an independent receiver and an independent transmitter, or may be a transceiver or a communication interface integrated with a transceiver function.

The apparatus 700 may further include a communication line 740. The communication interface 710, the processor 720, and the memory 730 may be connected to each other through the communication line 740. The communication line 740 may be a peripheral component interconnect (peripheral component interconnect, PCI for short) bus, an extended industry standard architecture (extended industry standard architecture, EISA for short) bus, or the like. The communication line 740 may be classified into an address bus, a data bus, a control bus, and the like. For ease of representation, only one bold line is used for representation in FIG. 7, but this does not mean that there is only one bus or only one type of bus.

Based on the foregoing content and a same concept, this application provides a communication apparatus, including a processor and a communication interface. The communication interface is configured to: receive a signal from a communication apparatus other than the communication apparatus and transmit the signal to the processor, or send a signal from the processor to a communication apparatus other than the communication apparatus. The processor is configured to implement, by using a logic circuit or by executing code instructions, a function of the network repository function, the requesting network function, or the first network function in the method embodiments related to FIG. 2 to FIG. 4, or configured to implement a function of the network repository function, the requesting network function, or the combined network function in the method embodiment related to FIG. 5.

Based on the foregoing content and a same concept, this application provides a computer-readable storage medium. The computer-readable storage medium stores a computer program or instructions. When the computer program or the instructions are executed by a communication apparatus, a function of the network repository function, the requesting network function, or the first network function in the method embodiments related to FIG. 2 to FIG. 4 is implemented, or a function of the network repository function, the requesting network function, or the combined network function in the method embodiment related to FIG. 5 is implemented.

Based on the foregoing content and a same concept, this application provides a communication system, including the network repository function, the requesting network function, and the first network function in the method embodiments related to FIG. 2 to FIG. 4, or including the network repository function, the requesting network function, or the combined network function in the method embodiment related to FIG. 5.

In this application, "at least one" means one or more, and "a plurality of" means two or more. "At least one of the following items (pieces)" or a similar expression thereof refers to any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined according to functions and internal logic of the processes.

It is clear that a person skilled in the art can make various modifications and variations to this application without departing from the protection scope of this application. This application is intended to cover these modifications and variations of this application if they fall within the scope of claims of this application and equivalent technologies thereof.

## Claims

1. A communication method, comprising:
receiving, by a network repository function, a first network function type from a requesting network function; and
sending, by the network repository function, a profile of a first network function corresponding to the first network function type to the requesting network function, wherein the profile of the first network function comprises a first indication, the first indication indicates combined deployment of the first network function and a second network function, and the first network function and the second network function have different network function types.

2. The method according to claim 1, wherein the first indication comprises an instance identifier of the second network function.

3. The method according to claim 1, further comprising:
receiving, by the network repository function, an instance identifier of the second network function from the requesting network function; and
sending, by the network repository function, a profile of the second network function corresponding to the instance identifier of the second network function to the requesting network function.

4. The method according to claim 3, wherein the first indication further comprises a second network function type of the second network function, and the method further comprises:
receiving, by the network repository function, the second network function type from the requesting network function.

5. The method according to claim 1, wherein the first indication comprises a combination attribute.

6. The method according to claim 1 or 5, further comprising:
sending, by the network repository function, a profile of the second network function to the requesting network function, wherein the profile of the second network function comprises the combination attribute.

7. The method according to claim 6, further comprising:
receiving, by the network repository function, the combination attribute and a second network function type of the second network function from the requesting network function.

8. The method according to any one of claims 1 to 7, further comprising:
receiving, by the network repository function, a first registration request from the first network function, wherein the first registration request comprises the profile of the first network function; and
sending, by the network repository function, a first registration success response to the first network function.

9. The method according to any one of claims 1 to 8, further comprising:
receiving, by the network repository function, a combined network function preference indication from the requesting network function, wherein the combined network function preference indication indicates the network repository function to preferentially select a profile of a network function that comprises a combination indication.

10. A communication method, comprising:
sending, by a requesting network function, a first network function type to a network repository function; and
receiving, by the requesting network function, a profile of a first network function corresponding to the first network function type from the network repository function, wherein the profile of the first network function comprises a first indication, the first indication indicates combined deployment of the first network function and a second network function, and the first network function and the second network function have different network function types.

11. The method according to claim 10, wherein the first indication comprises an instance identifier of the second network function.

12. The method according to claim 10, further comprising:
sending, by the requesting network function, an instance identifier of the second network function to the network repository function; and
receiving, by the requesting network function, a profile of the second network function corresponding to the instance identifier of the second network function from the network repository function.

13. The method according to claim 12, wherein the first indication further comprises a second network function type of the second network function, and the method further comprises:
determining, by the requesting network function, the combined deployment of the first network function and the second network function based on the second network function type, and sending the second network function type to the network repository function.

14. The method according to claim 10, wherein the first indication comprises a combination attribute.

15. The method according to claim 10 or 14, further comprising:
receiving, by the requesting network function, a profile of the second network function from the network repository function, wherein the profile of the second network function comprises the combination attribute.

16. The method according to claim 15, further comprising:
sending, by the requesting network function, the combination attribute and a second network function type of the second network function to the network repository function.

17. The method according to any one of claims 14 to 16, further comprising:
determining, by the requesting network function, the combined deployment of the first network function and the second network function based on the combination attribute in the profile of the second network function and a combination attribute in the profile of the first network function.

18. The method according to any one of claims 10 to 17, further comprising:
sending, by the requesting network function, a combined network function preference indication to the network repository function, wherein the combined network function preference indication indicates the network repository function to preferentially select a profile of a network function that comprises a combination indication.

19. A communication method, comprising:
sending, by a requesting network function, a first network function type to a network repository function;
receiving, by the network repository function, the first network function type from the requesting network function;
sending, by the network repository function, a profile of a first network function corresponding to the first network function type to the requesting network function; and
receiving, by the requesting network function, the profile of the first network function corresponding to the first network function type from the network repository function, wherein
the profile of the first network function comprises a first indication, the first indication indicates combined deployment of the first network function and a second network function, and the first network function and the second network function have different network function types.

20. A communication apparatus, comprising:
a processing unit, configured to control a transceiver unit to receive a first network function type from a requesting network function, wherein
the processing unit is configured to control the transceiver unit to send a profile of a first network function corresponding to the first network function type to the requesting network function, wherein the profile of the first network function comprises a first indication, the first indication indicates combined deployment of the first network function and a second network function, and the first network function and the second network function have different network function types.

21. The apparatus according to claim 20, wherein the first indication comprises an instance identifier of the second network function.

22. The apparatus according to claim 20, wherein the processing unit is further configured to control the transceiver unit to receive an instance identifier of the second network function from the requesting network function; and send a profile of the second network function corresponding to the instance identifier of the second network function to the requesting network function.

23. The apparatus according to claim 22, wherein the first indication further comprises a second network function type of the second network function, and the processing unit is further configured to control the transceiver unit to receive the second network function type from the requesting network function.

24. The apparatus according to claim 20, wherein the first indication comprises a combination attribute.

25. The apparatus according to claim 20 or 24, wherein the processing unit is further configured to control the transceiver unit to send a profile of the second network function to the requesting network function, wherein the profile of the second network function comprises the combination attribute.

26. The apparatus according to claim 25, wherein the processing unit is further configured to control the transceiver unit to receive the combination attribute and a second network function type of the second network function from the requesting network function.

27. The apparatus according to any one of claims 20 to 26, wherein the processing unit is further configured to control the transceiver unit to receive a first registration request from the first network function, wherein the first registration request comprises the profile of the first network function; and send a first registration success response to the first network function.

28. The apparatus according to any one of claims 20 to 27, wherein the processing unit is further configured to control the transceiver unit to receive a combined network function preference indication from the requesting network function, wherein the combined network function preference indication indicates the apparatus to preferentially select a profile of a network function that comprises a combination indication.

29. A communication apparatus, comprising:
a processing unit, configured to control a transceiver unit to send a first network function type to a network repository function, wherein
the processing unit is further configured to control the transceiver unit to receive a profile of a first network function corresponding to the first network function type from the network repository function, wherein the profile of the first network function comprises a first indication, the first indication indicates combined deployment of the first network function and a second network function, and the first network function and the second network function have different network function types.

30. The apparatus according to claim 29, wherein the first indication comprises an instance identifier of the second network function.

31. The apparatus according to claim 29, wherein the processing unit is further configured to control the transceiver unit to send an instance identifier of the second network function to the network repository function; and receive a profile of the second network function corresponding to the instance identifier of the second network function from the network repository function.

32. The apparatus according to claim 31, wherein the first indication further comprises a second network function type of the second network function, and the processing unit is further configured to: determine the combined deployment of the first network function and the second network function based on the second network function type, and control the transceiver unit to send the second network function type to the network repository function.

33. The apparatus according to claim 29, wherein the first indication comprises a combination attribute.

34. The apparatus according to claim 29 or 33, wherein the processing unit is further configured to control the transceiver unit to receive a profile of the second network function from the network repository function, wherein the profile of the second network function comprises the combination attribute.

35. The apparatus according to claim 34, wherein the processing unit is further configured to control the transceiver unit to send the combination attribute and a second network function type of the second network function to the network repository function.

36. The apparatus according to any one of claims 33 to 35, wherein the processing unit is further configured to determine the combined deployment of the first network function and the second network function based on the combination attribute in the profile of the second network function and a combination attribute in the profile of the first network function.

37. The apparatus according to any one of claims 29 to 36, wherein the processing unit is further configured to control the transceiver unit to send a combined network function preference indication to the network repository function, wherein the combined network function preference indication indicates the network repository function to preferentially select a profile of a network function that comprises a combination indication.

38. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 9 or the method according to any one of claims 10 to 18 by using a logic circuit or by executing code instructions.

39. A computer-readable storage medium, wherein the computer-readable storage medium stores a computer program or instructions, and when the computer program or the instructions are executed by a communication apparatus, the method according to any one of claims 1 to 9 or the method according to any one of claims 10 to 18 is implemented.

40. A computer program product, wherein the computer program product comprises a computer program or instructions, and when the computer program or the instructions are executed by a communication apparatus, the method according to any one of claims 1 to 9 or the method according to any one of claims 10 to 18 is implemented.

41. A communication system, comprising the communication apparatus according to any one of claims 20 to 28 and the communication apparatus according to any one of claims 29 to 37.
